Europäisches Patentamt

European Patent Office

Office européen des brevets

(11) Veröffentlichungsnummer : **0 060 529**
**B1**

(12) **EUROPÄISCHE PATENTSCHRIFT**

(45) Veröffentlichungstag der Patentschrift :
10.09.86

(21) Anmeldenummer : 82101992.4

(22) Anmeldetag : 12.03.82

(51) Int. Cl.⁴ : **F 16 K 11/06**

(54) **Mehrwegeventil mit einem Eingang und mindestens zwei Ausgängen, vorzugsweise Vierwegeventil.**

(30) Priorität : 16.03.81 DE 8107540 U

(43) Veröffentlichungstag der Anmeldung :
22.09.82 Patentblatt 82/38

(45) Bekanntmachung des Hinweises auf die Patenterteilung : 10.09.86 Patentblatt 86/37

(84) Benannte Vertragsstaaten :
AT BE CH DE FR IT LI NL

(56) Entgegenhaltungen :
DE-A- 2 901 100
DE-U- 1 851 074
DE-U- 8 020 109
FR-A- 937 368
GB-A- 926 543
GB-A- 928 299
US-A- 2 209 135
US-A- 2 209 136
US-A- 3 640 310
US-A- 3 831 621
US-A- 3 911 956

(73) Patentinhaber : **Hans Grohe GmbH & Co. KG**
**Auestrasse 9**
**D-7622 Schiltach (DE)**

(72) Erfinder : **Langer, Manfred**
**Am Forsthaus 12**
**D-8961 Haldenwang-Börwang (DE)**
Erfinder : **Flieger, Horst**
**Schlossbergstrasse 3**
**D-7622 Schiltach (DE)**

(74) Vertreter : **Patentanwälte Ruff und Beier**
**Neckarstrasse 50**
**D-7000 Stuttgart 1 (DE)**

**Beschreibung**

Die Erfindung betrifft ein Mehrwegeventil mit einem Eingang und mindestens zwei Ausgängen, vorzugsweise Vierwegeventil, mit einem Ventilgehäuse, in dem ein drehbarer, eine Dichtfläche aufweisender Ventilschieber angeordnet ist, die Dichtfläche des Ventilschiebers von einem in diesem axial verschiebbar angeordneten Dichtelement gebildet ist, dessen Rückseite zur Druckbelastung mit dem Innenraum kommunizierend verbunden ist, die Dichtflächen der für das ausströmende Wasser dienenden Austrittsöffnungen in der Dichtebene des Ventilschiebers liegen, der Wasserzulauf außerhalb der Dichtfläche in das Ventilgehäuse mündet, der Ventilschieber mit einer senkrecht zur Dichtfläche angeordneten Drehwelle verbunden ist, die aus dem Ventilgehäuse herausgeführt ist, das Innere des Ventilgehäuses nach außen abgedichtet ist, und die Abdichtung an der Drehwelle selbst oder an einem diese dicht umgebenden Ansatz vorgenommen ist.

Bei bekannten Mehrwegeventilen in Drehschieber-Bauweise ist ein zentraler Zulauf vorhanden, und die Abgänge sind kreisförmig darum herum verteilt. Zulauf und Abgänge münden in die Ventilfläche. Die Betätigungskräfte, die zur Bedienung derartiger Ventile erforderlich sind, sind relativ groß. Außerdem muß das Wasser auf kurzem Wege um 180° umgelenkt werden, was sehr strömungsungünstig ist. .

Das erfindungsgemäße Ventil gehört zu einer Gruppe von Ventilen, bei denen sich ein Innenraum im Gehäuse, vorzugsweise im wesentlichen über den gesamten Innendurchmesser des Gehäuses erstreckt. In diesem Innenraum, der mit dem zuströmenden Wasser gefüllt ist, sind der Drehschieber und die Dichtelemente der Ausströmöffnungen angeordnet. Das zuströmende Wasser kann somit mit besonderem Vorteil an geeigneter Stelle in den Innenraum geführt werden. Da somit im gesamten Innenraum zuströmendes Wasser zur Verfügung steht, kann die gegenseitige Überdeckung des Drehschiebers und der Dichtflächen der Ausströmöffnungen klein gehalten werden und sich im wesentlichen auf die Abdeckung der zu verschließenden Ausströmöffnungen beschränken. Ein Vierwegventil dieser Art ist beispielsweise aus der US-A-2 209 135 bekannt. Dort sind für die drei Ausgänge aus dem Gehäuse jeweils gesonderte Dichtkapseln vorgesehen, die in entsprechenden Ausnehmungen des Ventilschiebers gelagert sind. Die Kapseln sind in begrenztem Maße in axialer Richtung zusammendrückbar. Ihr Innenraum kommuniziert mit der jeweils verschlossenen Ausgangsöffnung. Das bekannte Ventil ist kompliziert aufgebaut und wegen der Vielzahl der Bauteile auch verschleißanfällig.

Aus der US-A-3 640 310 ist weiterhin ein Vielwegventil bekannt, das für die Wasserführung bei einem Schwimmbad bestimmt ist. Die Ausgangsseite des Ventiles besitzt in der Dichtebene fünf verschiedene, segmentartige Auslaßöffnungen und eine Stopposition (16). Der Ventilschieber besitzt eine segmentartige Durchgangsöffnung und diametral gegenüberliegend eine halbkreisförmige, haubenartige Überdachung, die eine Verbindung verschiedener Auslaßöffnungen miteinander ermöglicht, ohne daß diese mit dem Zulauf in Verbindung gebracht werden. Zur Abdichtung ist ein am Umfang des Gehäuses umlaufender Dichtungsring mit radialen Stegen vorgesehen, auf dem der Ventilschieber läuft. Zusätzlich zu der Kraft einer Andruckfeder lastet auf dem Ventilschieber noch der Druck des Zustromes, was eine Schwergängigkeit des Ventiles zur Folge hat. Im übrigen ist das Ventil nur für vorbestimmte Raststellungen eingerichtet.

Der Erfindung liegt die Aufgabe zugrunde, ein Mehrwegeventil zu schaffen, das Freiheit in der Strömungsführung erlaubt und bei einwandfreier Abdichtung eine leichtgängige Bauweise ermöglicht.

Die Erfindung ist dadurch gekennzeichnet, daß der übrige Querschnitt des Ventilschiebers auf der Seite der Drehwelle druckentlastet ist, in jeder Drehstellung des Ventilschiebers mindestens ein Ausgang geöffnet ist, das Dichtelement im Ventilschieber eine Keramikplatte ist, die in der Dichtebene mit einem Keramikstein zusammenwirkt, und der Keramikstein an den Stellen der Dichtfläche, die keine Steuerfunktion übernehmen, Aussparungen aufweist.

Dadurch, daß beim erfindungsgemäßen Ventil stets mindestens ein Ausgang geöffnet ist, baut sich an der Zulaufseite kein übermäßiger Druck auf, der ohnehin durch die Druckentlastung weitgehend unwirksam ist. Dadurch, daß der Keramikstein selbst ausgespart ist, wird eine geringe Berührungsfläche zwischen Keramikplatte und Keramikstein erhalten, wodurch das Ventil feinfühlig und leichtgängig ist. Weiterhin kann der in der Dichtfläche liegende Querschnitt des Ventilschiebers oder der Austrittsöffnungen so klein gehalten sein, daß im wesentlichen lediglich die Austrittsöffnungen, durch die in der jeweiligen Ventilstellung kein Medium austreten soll, verschlossen sind und der Rest der Dichtfläche zum Gehäuse-Innenraum offen ist. Vorzugsweise ist der Ventilschieber so vorgeformt bzw. ausgespart, daß gleichzeitig mindestens zwei Austrittsöffnungen mindestens teilweise öffenbar sind. Die Dichtelemente sind Keramikdichtungen. Es können jedoch auch Dichtelemente aus Kunststoff/Kunststoff oder Kunststoff/Metall in Frage kommen.

Weitere Merkmale der Erfindung ergeben sich aus der nachfolgenden Beschreibung einer bevorzugten Ausführungsform in Verbindung mit der Zeichnung und den Ansprüchen.

In der Zeichnung zeigen :

Figur 1 einen Längsschnitt durch ein Vierwegeventil nach der Erfindung und

Figur 2 eine schematische Darstellung der Dichtelemente des Ventiles nach Fig. 1.

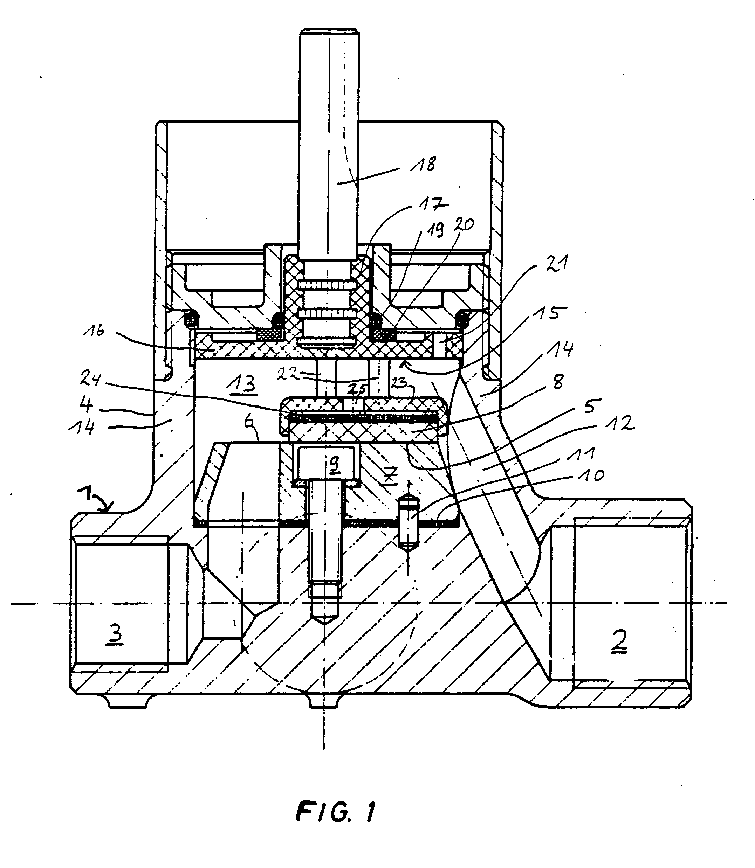

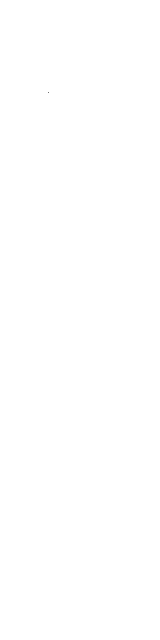

Bei der in der Zeichnung in den Figuren 1 und 2 dargestellten Ausführungsform weist ein Vierwegeventil 1 vier mit Innengewinden versehene Außenanschlüsse für Zulauf- bzw. Ablaufleitungen auf. Die vier Anschlüsse liegen in einer Ebene und nehmen jeweils zueinander einen rechten Winkel ein. Der in der Zeichnung rechts dargestellte Anschluß 2 dient für die Zufuhr von Wasser. Der links dargestellte Anschluß 3 ist ebenso wie die zwei übrigen vor und hinter der Zeichnungsebene liegenden Anschlüsse ein Ablaufanschluß. Von den Ablaufanschlüssen 3 führen Kanäle nach oben in den Innenraum eines Ventilgehäuses 4, wo sie in einer Dichtebene 5 enden, die auf der Seite der Kanäle von einem die Kanalmündungen 6 aufweisenden Keramikstein 7 und auf der anderen Seite von einer auf dem Keramikstein verschiebbaren bzw. drehbaren Keramikdichtplatte 8 begrenzt wird. Der Keramikstein 7 ist mit dem Gehäuseboden durch eine zentrale Schraube 9 unter Zwischenlage einer Öffnungen für die Kanäle aufweisenden Dichtung 10 verschraubt und durch einen Haltestift 11 gegen Verdrehung gesichert. Ein vom Zulaufanschluß 2 ausgehender Zulaufkanal 12 führt ebenfalls zum Innenraum 13 des Ventilgehäuses 4 und mündet in diesen ungefähr radial bis schräg durch den im wesentlichen zylindrischen Außenmantel 14 in den Innenraum 13.

Die Keramikplatte 8 ist ein Teil eines Ventilschiebers 15 und ist mit einem scheibenförmigen Lagerelement 16 verbunden, das im wesentlichen den gesamten Querschnitt des Innenraumes 13 des Gehäuses 4 einnimmt und an der in axialer Richtung von der Dichtfläche 5 entfernten Seite des Innenraumes 13 angeordnet ist. Das Lagerelement 16 ist mit einem zentrischen Ansatz durch das Ventilgehäuse herausgeführt und über diesen mit einer drehbaren Betätigungswelle 18 verbunden. Das Lagerelement 16 ist am Außenumfang des Ansatzes 17 mit Hilfe einer Rundschnurdichtung 19 gegen das Gehäuse abgedichtet, wobei ein Federring 20 eine Federung in axialer Richtung bewirkt. Eine durch das scheibenförmige Teil des Lagerelementes 16 geführte Bohrung 21 ermöglicht den Wasserzutritt auch zur von der Dichtfläche abgewandten Rückseite der Scheibe des Lagerelementes, so daß dieses bis auf den Durchmesser der Rundschnurdichtung 19 druckentlastet ist. Das Lagerelement 16 weist zwei säulenförmige Stützen 22 auf, die auf die Keramikplatte 8 gerichtet sind, durch den Innenraum des Gehäuses 4 ragen und mit einer haubenartigen Fassung 23 für die Keramikplatte 8 verbunden sind und diese in exzentrischer Lage kippfrei halten. Zwischen der haubenartigen Fassung 23 und der Keramikplatte 8 ist eine federnde Zwischenlage 24 vorgesehen, die für einen gleichmäßigen Anpreßdruck der Keramikplatte 8 an den Keramikstein 7 sorgt und außerdem etwaige Justierungsungenauigkeiten auszugleichen vermag. Die haubenartige Fassung 23 weist eine Bohrung 25 auf, durch die die Rückseite der Keramikplatte 8 über die federnde Zwischenlage 24 mit dem Innenraum 13 des Gehäuses in Verbindung steht, so daß zusätzlich der Wasserdruck als Anpreßdruck für die Keramikplatte 8 an die Dichtfläche 5 dient.

Wie aus Fig. 2 ersichtlich, hat die Keramikplatte 8 etwa die Form einer Kreisscheibe, aus der ein Kreissegment von ca. 140° entfernt ist. Die drei Kanalmündungen 6 der zu den Ablaufanschlüssen 3 führenden Kanäle sind in der Dichtfläche 5 in einem Winkel von jeweils 120° um die Drehachse angeordnet. Die Kanalmündungen 6 sind unrund, d. h. in radialer Richtung schmaler als senkrecht dazu, wodurch bei möglichst großem Öffnungsquerschnitt der Durchmesser der Dichtfläche möglichst klein gehalten werden kann. Noch im Keramikstein 7 gehen die Kanäle von dem unrunden in einen runden Querschnitt über, wie dies in Fig. 2 angedeutet ist. Dadurch, daß die Dichtfläche 5 und insbesondere die Keramikplatte 8 eine geringe flächenhafte Ausdehnung besitzen, ist die Reibungsfläche zwischen Keramikplatte 8 und Keramikstein 7 gering, was zusammen mit der Druckentlastung dazu führt, daß das Ventil leichtgängig und dadurch leicht und feinfühlig bedienbar ist. Dadurch, daß der Öffnungswinkel der Keramikplatte 8 mehr als 120° beträgt, ist es bei entsprechender Einstellung des Ventils möglich, auch zwei Kanalmündungen 6 gleichzeitig weitgehend zu öffnen. Außerdem ist in jeder Drehstellung der Keramikplatte stets mindestens eine Mündung geöffnet, was in vielen Anwendungsfällen von Vorteil ist. Die Oberseite der feststehenden Steuerscheibe, d. h. des Keramiksteines 7 weist mit Vorteil an den Stellen der Steuerfläche, die keine Steuerfunktion übernehmen, Aussparungen auf, um die Reibung bei der Steuerung so gering wie möglich zu halten. Es ist auch möglich, sowohl den Ventilschieber 15 mit Lagerelement 16 und Keramikplatte 8, als auch den feststehenden Keramikstein 7 in einem käfigartigen Gehäuseeinsatz zu lagern, der im Gehäuse 4 festlegbar ist. Die Schraube 8 entfällt dann, da der Keramikstein durch den Gehäuseeinsatz abdichtend gegen den die Abflußöffnungen aufweisenden Gehäuseboden gedrückt wird. Auch der Federring 20 kann entfallen, da die so gebildete Funktionseinheit in sich ausgeglichen ist. Diese Ausführungsmöglichkeit hat den Vorteil, daß im Falle einer Wartung die gesamte Funktionseinheit aus dem Gehäuse herausnehmbar und ggf. austauschbar ist.

**Patentansprüche**

1. Mehrwegeventil mit einem Eingang und mindestens zwei Ausgängen, vorzugsweise Vierwegeventil, mit einem Ventilgehäuse (4), in dem ein drehbarer, eine Dichtfläche (5) aufweisender Ventilschieber (15) angeordnet ist, die Dichtfläche (5) des Ventilschiebers (15) von einem in diesem axial verschiebbar angeordneten Dichtelement (8) gebildet ist, dessen Rückseite zur Druckbelastung mit dem Innenraum kommunizierend verbunden ist (25), die Dichtflächen (5) der für das ausströmende Wasser dienenden Austrittsöffnungen (6) in der Dichtebene des Ventilschiebers (15) liegen, der Wasserzulauf (12) außerhalb der Dichtfläche (5) in das Ventilgehäuse mündet, der Ventilschieber (15) mit einer senkrecht zur Dichtfläche angeordneten Drehwelle (18) verbunden ist, die aus dem Ventilgehäuse (4) herausgeführt ist, das Innere des Ventilgehäuses (4) nach außen abgedichtet ist (19), und die Abdichtung an der Drehwelle (18) selbst oder an einem diese dicht umgebenden Ansatz (17) vorgenommen ist, dadurch gekennzeichnet, daß der übrige Querschnitt des Ventilschiebers (15) auf der Seite der Drehwelle (18) druckentlastet ist (20, 21), in jeder Drehstellung des Ventilschiebers (15) mindestens ein Ausgang (6) geöffnet ist, das Dichtelement im Ventilschieber (15) eine Keramikplatte (8) ist, die in der Dichtebene mit einem Keramikstein (7) zusammenwirkt (24, 25) und der Keramikstein (7) an den Stellen der Dichtfläche (5), die keine Steuerfunktion übernehmen, Aussparungen aufweist.

2. Mehrwegeventil nach Anspruch 1, dadurch gekennzeichnet, daß der Ventilschieber (15) und der Keramikstein (7) als aus dem Gehäuse (4) herausnehmbare Funktionseinheit ausgebildet sind.

3. Mehrwegeventil nach Anspruch 1 oder 2, dadurch gekennzeichnet, daß der Ventilschieber (15), das Lagerelement (16), die Keramikplatte (8) und der Keramikstein (7) in einem käfigartigen Gehäuseeinsatz gelagert sind, der im Gehäuse (4) festlegbar ist.

4. Mehrwegeventil nach einem der vorhergehenden Ansprüche, dadurch gekennzeichnet, daß drei Ausgänge (6) vorgesehen sind, die in der Dichtfläche (5) in einem Winkel von jeweils 120° um die Drehachse angeordnet sind und der Öffnungswinkel der Keramikplatte (8) vorzugsweise mehr als 120° beträgt.

5. Mehrwegeventil nach einem der vorhergehenden Ansprüche, dadurch gekennzeichnet, daß der Ventilschieber (15) auf seiner von der Dichtfläche (5) abweisenden Seite in axialer Richtung federnd gelagert ist.

6. Mehrwegeventil nach einem der vorhergehenden Ansprüche, dadurch gekennzeichnet, daß zwischen dem Ventilschieber (15) und der Keramikplatte (8) eine federnde Zwischenlage (24) vorgesehen ist.

## Claims

1. Multiway valve with one entry and at least two exits and preferably a four-way valve, with a valve casing (4) in which is arranged a rotary valve slide (15) having a packing surface (5), which is formed by a packing member (8) axially displaceably arranged therein and whose back communicates (25) with the interior for compressive load application, the packing surfaces (5) of the outlet ports (6) for the outflowing water being located in the packing or sealing plane of the valve slide (15), the water intake (12) issuing into the valve casing outside the packing surface (5), the valve slide (15) is connected to a rotary shaft (18) arranged vertically to the packing surface and which is led out of the valve casing (4), the interior of valve casing (4) is sealed to the outside (19) and the sealing is performed on the rotary shaft (18) or on a shoulder (17) closely surrounding the same, characterized in that the remaining cross-section of the valve slide (15) is pressure-relieved (20, 21) on the side of the rotary shaft (18), at least one exit (6) is open in each rotation position of valve slide (15), the packing member in the valve slide (15) is a ceramic plate (8), which cooperates (24, 25) in the sealing plane with a ceramic block (7) and the latter is provided at the points of the packing surface (5) not assuming a control function with recesses.

2. Multiway valve according to claim 1, characterized in that the valve slide (15) and the ceramic block (7) are constructed as a functional unit which can be removed from the casing (4).

3. Multiway valve according to claims 1 or 2, characterized in that the valve slide (15), bearing member (16), ceramic plate (8) and ceramic block (7) are mounted in a cage-like casing insert, which can be fixed in casing (4).

4. Multiway valve according to one of the preceding claims, characterized in that three exits (6) are provided, which are arranged in the packing surface (5) at an angle of in each case 120° about the rotation axis and the opening angle of the ceramic plate (8) is preferably more than 120°.

5. Multiway valve according to one of the preceding claims, characterized in that the valve slide (15) is resiliently mounted in the axial direction on its side directed away from the packing surface (5).

6. Multiway valve according to one of the preceding claims, characterized in that a resilient intermediate layer (24) is provided between valve slide (15) and ceramic plate (8).

## Revendications

1. Valve à voies multiples présentant une entrée et au moins deux sorties, de préférence valve à quatre voies, comprenant un carter (4) dans lequel est logé un obturateur coulissant rotatif (15) présentant une surface d'étanchéité (5), la surface d'étanchéité (5) de l'obturateur coulissant (15) étant formée par un élément d'étanchement (8) disposé à coulissements axiaux dans cet obturateur et dont la face postérieure est en liaison communicante (25) avec l'espace interne en vue d'une sollicitation par la pression, les surfaces d'étanchéité (5) des orifices de sortie (6) servant à la sortie de l'eau étant situées dans le plan d'étanchéité de l'obturateur coulissant (15), l'adduction d'eau (12) débouchant dans le carter de la valve à l'extérieur de la surface d'étanchéité (5), l'obturateur coulissant (15) étant relié à un arbre rotatif (18) agencé perpendiculairement à la surface d'étanchéité et sortant du carter (4) de la valve, l'intérieur de ce carter (4) étant rendu étanche vers l'extérieur (19), et l'étanchement étant assuré sur l'arbre rotatif (18) proprement dit ou sur un appendice (17) entourant hermétiquement ce dernier, caractérisée par le fait que la pression est détendue (20, 21) sur le reste de la section de l'obturateur coulissant (15) du côté de l'arbre rotatif (18) ; au moins une sortie (6) est ouverte dans chaque position de l'obturateur coulissant (15) prise par rotation ; l'élément d'étanchement situé dans l'obturateur coulissant (15) consiste en une plaquette de céramique (8) qui coopère (24, 25) dans le plan d'étanchéité avec un bloc de céramique (7) ; et le bloc de céramique (7) présente des échancrures aux endroits de la surface d'étanchéité (5) qui ne remplissent aucune fonction de commande.

2. Valve à voies multiples selon la revendication 1, caractérisée par le fait que l'obturateur coulissant (15) et le bloc de céramique (7) sont réalisés sous la forme d'une unité fonctionnelle pouvant être extraite du carter (4).

3. Valve à voies multiples selon la revendication 1 ou 2, caractérisée par le fait que l'obturateur coulissant (15), l'organe de portée (16), la plaquette de céramique (8) et le bloc de céramique (7) sont montés dans une pièce en forme de cage, prisonnière dans le carter et pouvant être arrêtée dans ce carter (4).

4. Valve à voies multiples selon l'une des revendications précédentes, caractérisée par le fait que trois sorties (6) sont prévues et sont disposées, dans la surface d'étanchéité (5), selon un angle respectif de 120° autour de l'axe de rotation ; et l'angle d'ouverture de la plaquette de céramique (8) excède de préférence 120°.

5. Valve à voies multiples selon l'une des revendications précédentes, caractérisée par le fait que l'obturateur coulissant (15) est monté élastiquement dans le sens axial sur son côté tourné à l'opposé de la surface d'étanchéité (5).

6. Valve à voies multiples selon l'une des revendications précédentes, caractérisée par le fait qu'une couche intercalaire élastique (24) est prévue entre l'obturateur coulissant (15) et la plaquette de céramique (8).

FIG. 1

FIG. 2